# FASCICULE DE BREVET EUROPEEN

(11) **EP 1 412 651 B1**
(45) Date de publication et mention de la délivrance du brevet: **11.02.2009**
(21) Numéro de dépôt: 02774841.7
(22) Date de dépôt: 26.07.2002
(51) Int. Cl.: F16D 27/118

(54) **DISPOSITIF D'ACCOUPLEMENT A CRABOT**
VERBINDUNGSVORRICHTUNG FÜR KUPPLUNGSMUFFE
CLUTCH SLEEVE COUPLING DEVICE

(30) Priorité: 27.07.2001 FR 0110123
(43) Date de publication de la demande: 28.04.2004
(73) Titulaire: Thales, 92200 Neuilly Sur Seine (FR)
(72) Inventeur: SKORUCAK, Bela, c/oThales Intellectual Property, 94117 Arcueil Cedex (FR)
(74) Mandataire: Collet, Alain
(86) Numéro de dépôt international: PCT/FR2002/002686
(87) Numéro de publication internationale: WO 2003/012309

(56) Documents cités:
- EP-A- 0 806 580
- FR-A- 2 286 975
- FR-A- 2 667 372
- US-A- 2 933 171
- US-A- 5 078 249
- US-A- 5 584 776

## Description

L'invention se rapporte à un dispositif d'accouplement de deux arbres destinés à tourner dans le prolongement l'un de l'autre. Un crabot assure l'accouplement des deux arbres. Un crabot comporte généralement des dents ou des griffes appartenant à chacun des deux arbres. Lorsque les dents (ou les griffes) coopèrent entre elles, les deux arbres sont accouplés. Un dispositif d'accouplement à crabot comporte également des moyens pour écarter les dents de chaque arbre afin de les désaccoupler. Ces moyens seront appelés moyens de décrabotage pour la suite de la description.

Des moyens connus de décrabotage nécessitent l'arrêt de la rotation des deux arbres ainsi qu'un effort extérieur permettant d'écarter les dents. En effet, les dents sont généralement maintenues en contact au moyen d'un ressort et il est donc nécessaire de vaincre l'effort de ce ressort pour décraboter.

Dans le but de pallier ces difficultés, d'autres moyen connus de décrabotage, comme le document FR 2 286 975, qui est considéré comme l'art antérieur le plus proche, proposent un dispositif d'accouplement à crabot dans lequel les moyens de décrabotage peuvent désaccoupler les arbres même lorsque ceux-ci sont en rotation. Permettre un désaccouplage en rotation permet d'utiliser les moyens de décrabotage comme organe de sécurité. Ils permettent de désaccoupler rapidement sans attendre l'arrêt de la rotation. Ledit dispositif peut cependant être amélioré. A cet effet, l'invention a pour objet un dispositif d'accouplement de deux arbres destinés à tourner par rapport à un carter, dans le prolongement l'un de l'autre sensiblement autour d'un axe, le dispositif comportant un crabot permettant à un des arbres d'entraîner l'autre et des moyens de décrabotage permettant de désaccoupler le crabot, caractérisé en ce que les moyens de décrabotage comportent une rampe solidaire du carter, la rampe ayant une forme hélicoïdale autour de l'axe, un disque plan dont le plan est sensiblement perpendiculaire à l'axe, ledit disque étant solidaire d'une extrémité de l'arbre mobile en translation selon l'axe par rapport à l'arbre, et un élément destiné à rouler entre la rampe et le disque de façon à provoquer un mouvement de translation de l'extrémité du premier arbre par rapport au carter sensiblement suivant l'axe, le mouvement de translation permettant de désaccoupler le crabot.

L'invention permet en outre de réduire considérablement l'effort nécessaire au décrabotage. Grâce à l'invention, l'effort nécessaire à l'écartement des dents du crabot n'est plus fourni par des moyens extérieurs au dispositif mais par le dispositif lui-même et, plus précisément, par l'énergie de rotation des arbres. Le seul effort nécessaire au décrabotage est, grâce à l'invention, un effort pour déplacer la bille d'une position de repos vers une position entre la rampe et le disque.

L'invention sera mieux comprise et d'autres avantages apparaîtront à la lecture de la description détaillée d'un mode de réalisation de l'invention, description illustrée par le dessin joint dans lequel :
- les figures 1, 2 et 3 représentent un dispositif d'accouplement conforme à l'invention en position crabotée ;
- les figures 4, 5 et 6 représentent le même dispositif lors du début de décrabotage ;
- les figures 7, 8 et 9 représentent à nouveau le même dispositif en cours de décrabotage ;
- les figures 10, 11 et 12 représentent le dispositif en fin de décrabotage ;
- les figures 13, 14 et 15 représentent le dispositif en position décrabotée ;

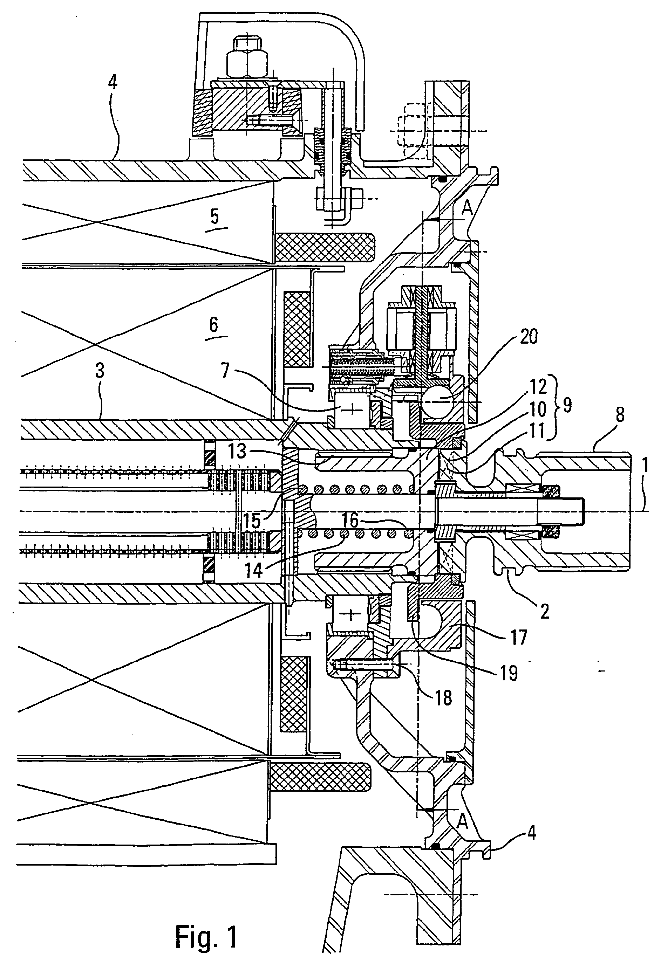

- Les figures 1, 4, 7, 10 et 13 représentent le dispositif en coupe, le plan de coupe contenant l'axe de rotation des arbres ;

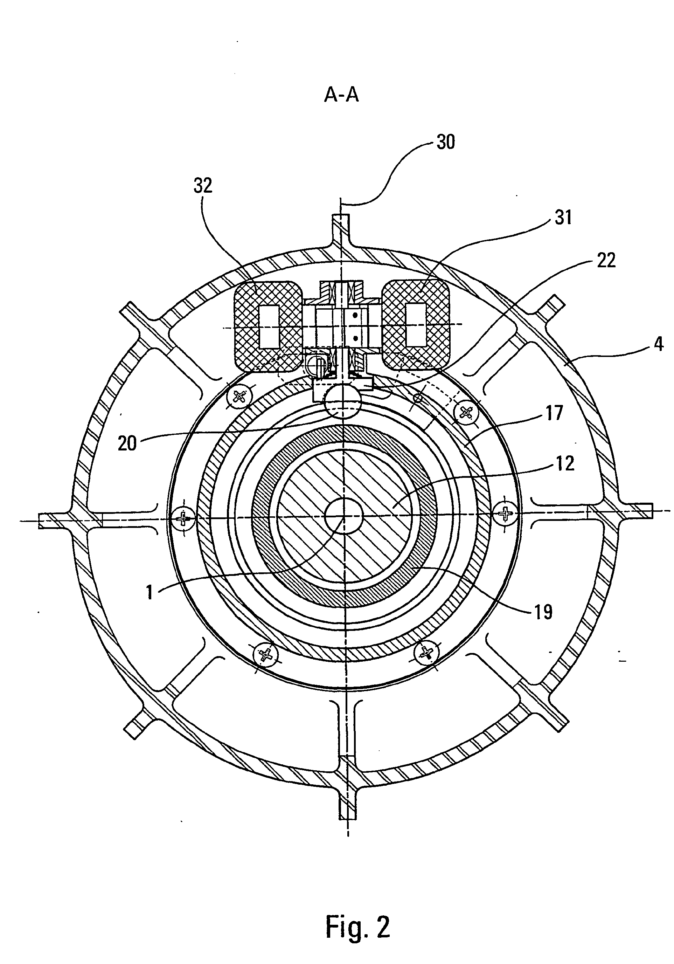

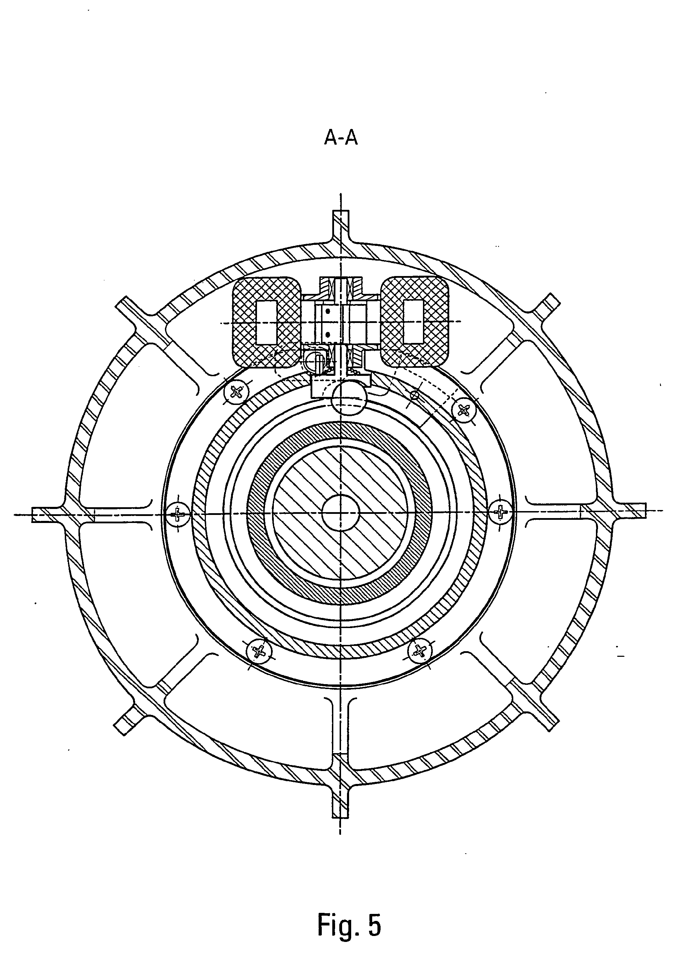

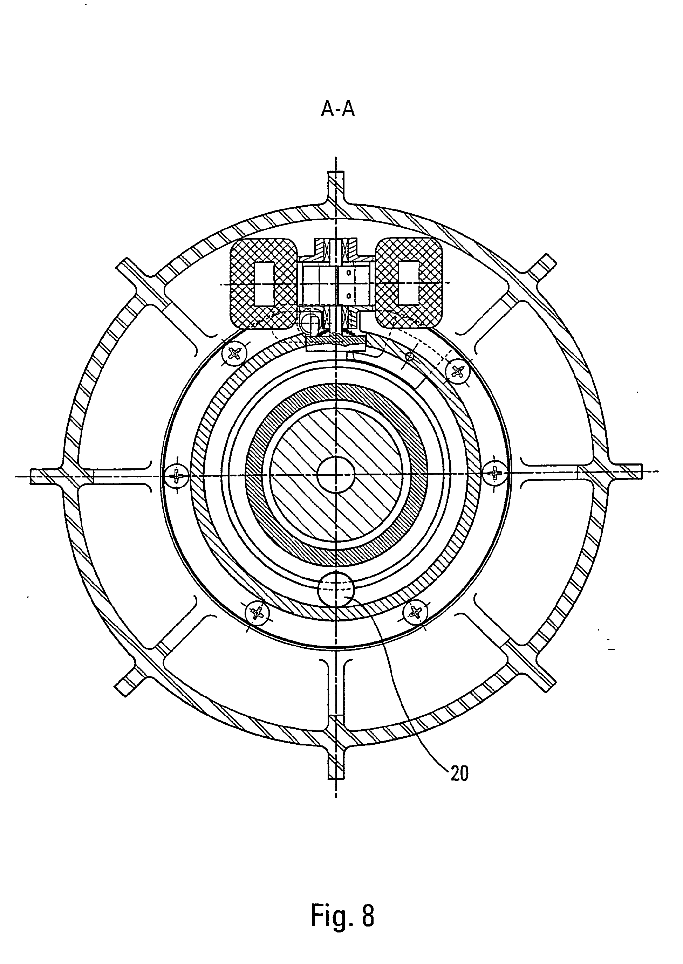

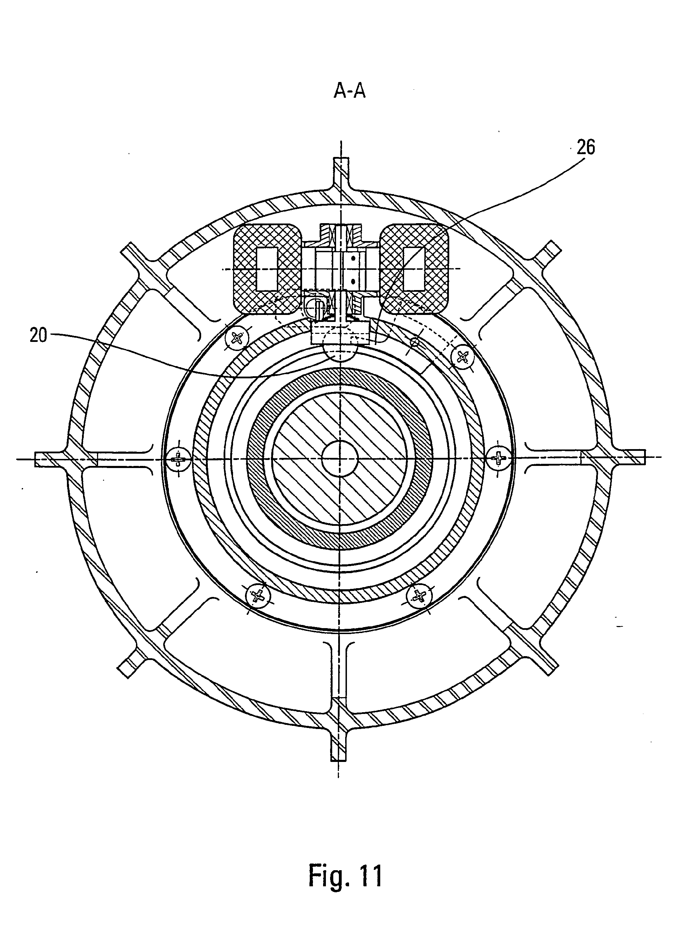

- Les figures 2, 5, 8 et 11 représentent le dispositif en coupe, le plan de coupe étant perpendiculaire à l'axe de rotation des arbres, la position du plan de coupe des figures 2, 5, 8 et 11 étant matérialisée sur les figures 1, 4, 7 et 10 par un trait mixte fin dont les extrémités portent chacune une flèche et un repère A ;

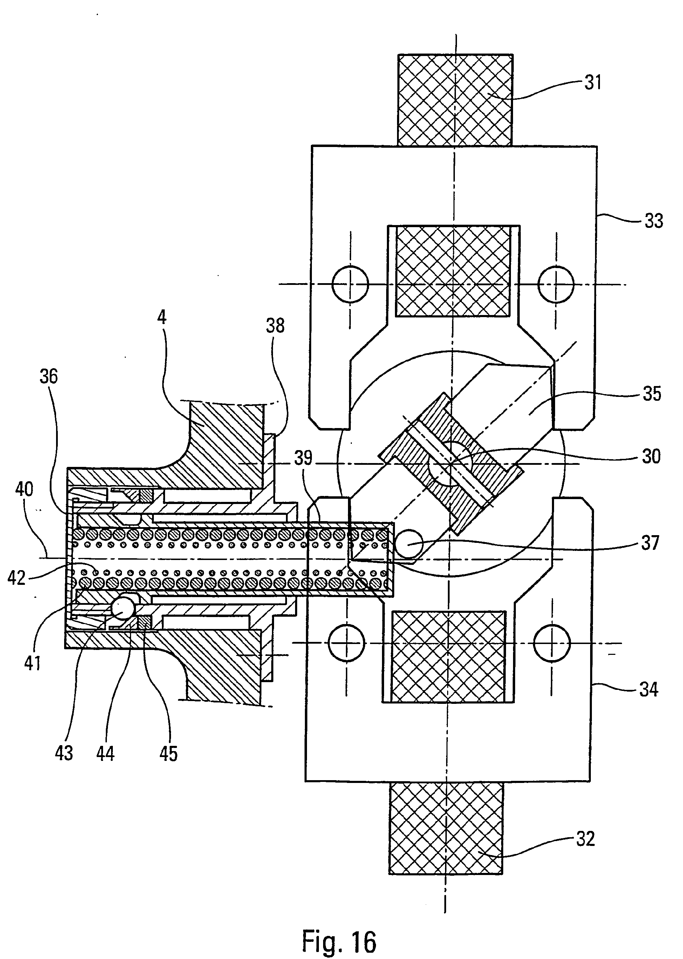

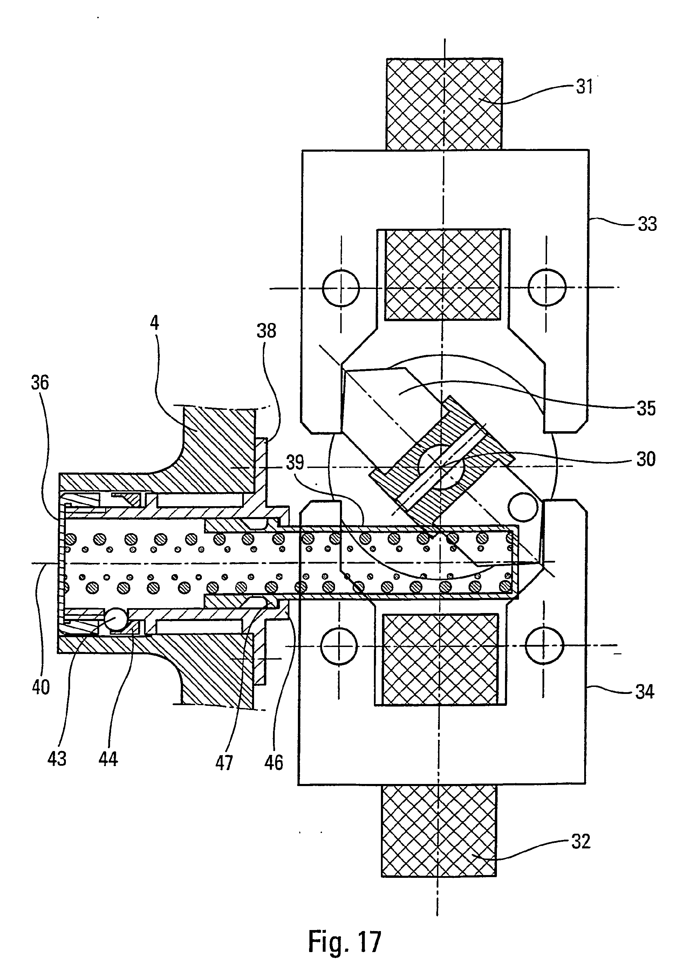

- les figures 16 et 17 représentent un fusible thermique permettant de commander le décrabotage ;

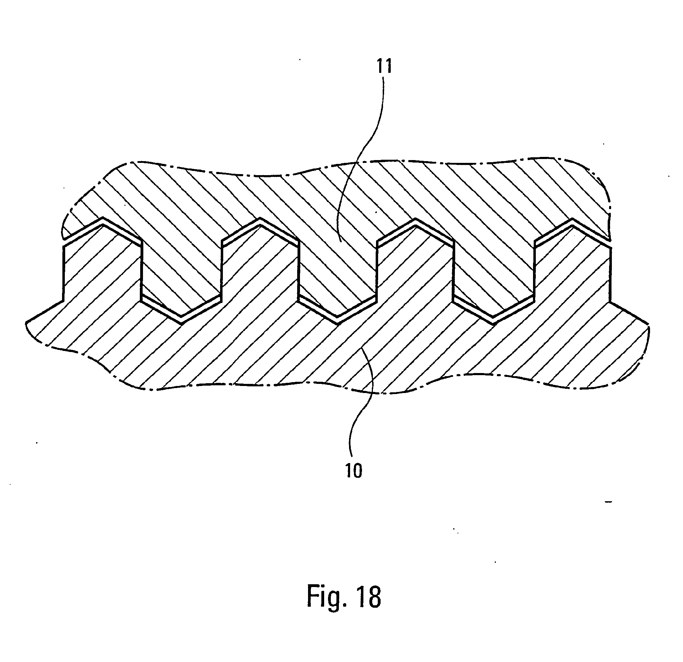

- la figure 18 représente un exemple de réalisation des dents du crabot.

Pour simplifier la suite de la description, les mêmes éléments porteront les mêmes repères dans les différentes figures.

Sur la figure 1, un dispositif d'accouplement est représenté en coupe selon un plan comprenant un axe 1 autour duquel deux arbres 2 et 3 peuvent tourner par rapport à un carter 4. L'arbre 3 est par exemple celui du rotor d'un moteur électrique. Des enroulements 5 du stator du moteur sont solidaires du carter 4 et des enroulements 6 du rotor sont solidaires de l'arbre 3. Un palier tournant comportant par exemple un roulement 7 permet la rotation de l'arbre 3 par rapport au carter 4, la rotation se faisant autour de l'axe 1. L'arbre 2 permet par exemple d'accoupler le moteur électrique à une boîte relais (non représentée) par l'intermédiaire de cannelures 8.

Un crabot 9 permet d'accoupler et de désaccoupler les arbres 2 et 3. Selon l'exemple représenté, le crabot 9 comporte une première série de dents 10 solidaires de l'arbre 2 et une deuxième série de dents 11 solidaires d'une extrémité 12 de l'arbre 3. L'extrémité 12 est mobile en translation selon l'axe 1 par rapport à l'arbre 3. Une liaison en rotation de l'extrémité 12 selon l'axe 1 par rapport à l'arbre 3 est assurée au moyen de cannelures 13. Les dents 10 et les dents 11 coopèrent entre elles de façon à assurer l'entraînement de l'arbre 2 par l'arbre 3 lorsque le dispositif d'accouplement est en position crabotée. Il est bien entendu que l'invention n'est pas limitée à l'entraînement de l'arbre 2 par l'arbre 3. L'inverse est également possible par exemple si le moteur électrique est utilisé en mode générateur de courant électrique.

Un ressort hélicoïdal 14 tend à maintenir les dents 10 et 11 en contact. Le ressort 14 s'appuie à sa première extrémité 15 sur l'arbre 3 et à sa seconde extrémité 16 sur l'extrémité 12. Lorsque les dents 11 et 12 sont en contact, le dispositif d'accouplement est en position crabotée.

Des moyens de décrabotage permettent de désaccoupler le crabot 9. Plus précisément, ces moyens permettent d'écarter les dents 10 des dents 11 pour obtenir une position décrabotée du dispositif d'accouplement.

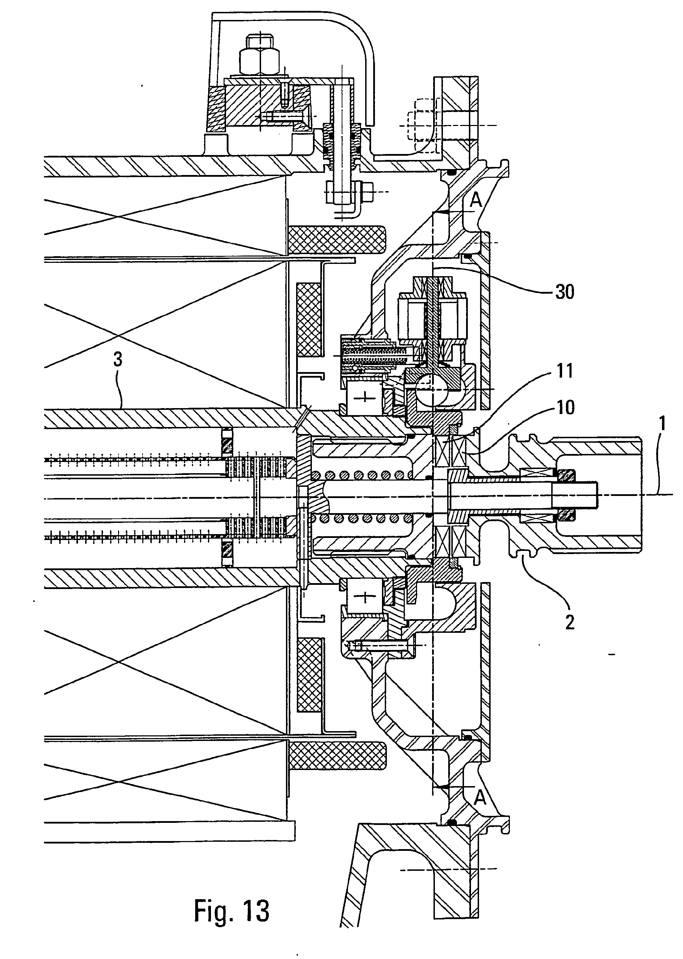

La position décrabotée sera décrite ultérieurement à l'aide des figures 13 à 15. Pour écarter les dents 10 des dents 11, les moyens de décrabotage compriment le ressort 14 en opérant un mouvement de translation de l'extrémité 12 par rapport à l'arbre 3.

Selon l'invention, les moyens de décrabotage comportent une rampe 17 ayant une forme hélicoïdale autour de l'axe 1. La rampe 17 est solidaire du carter 4. La rampe 17 est, par exemple, fixée au carter 4 par l'intermédiaire de vis 18. Les moyens de décrabotage comportent également un disque 19 plan solidaire de l'extrémité 12 de l'arbre 3.

Les moyens de décrabotage comportent encore un élément, par exemple une bille 20, destiné à rouler entre la rampe 17 et le disque 19 de façon à provoquer le mouvement de translation de l'extrémité 12 de l'arbre 3 par rapport au carter 4 sensiblement suivant l'axe 1. La forme de la rampe 17 est fonction de la forme de l'élément qui y roule. Plus précisément, lorsque l'élément est une bille 20, la rampe 17 a la forme d'une gouttière dans laquelle la bille 20 peut rouler. Deux sections de la rampe 17 sont visibles sur la figure 1 et ont la forme d'un U. Pour la suite de la description, on utilisera l'appellation bille 20 pour nommer l'élément. Il est bien entendu que cette appellation ne constitue pas une limitation de l'invention à un élément de forme sphérique. L'invention peut être mise en oeuvre pour d'autres formes d'élément tel que par exemple un rouleau cylindrique ou conique. La forme de l'élément doit être choisie pour qu'il puisse rouler entre la rampe 17 et le disque 19, la forme de la rampe doit être adaptée en conséquence pour pouvoir guider ledit élément.

Par ailleurs, la forme de la rampe 17 permet à la bille 20 d'effectuer un tour autour de l'axe 1 pendant l'opération de décrabotage. Pour mieux voir la forme de la rampe 17, on se reporte à la figure 2 qui représente le dispositif déjà décrit figure 1, selon un plan de coupe AA perpendiculaire au plan de la figure 1. Sur la figure 2, la rampe 17 apparaît comme un cercle dont le centre est l'axe 1.

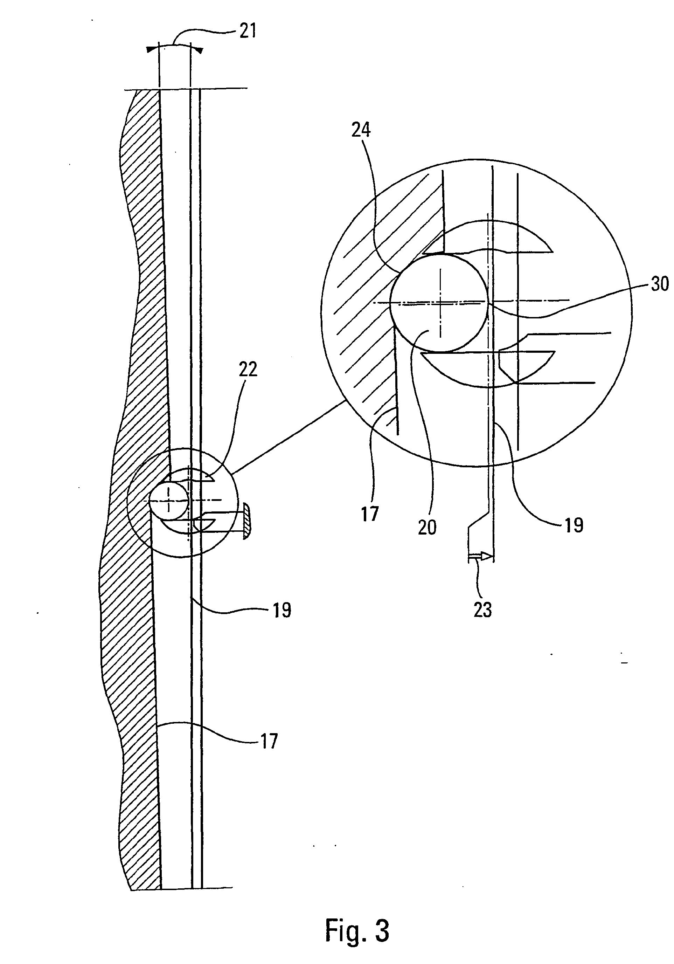

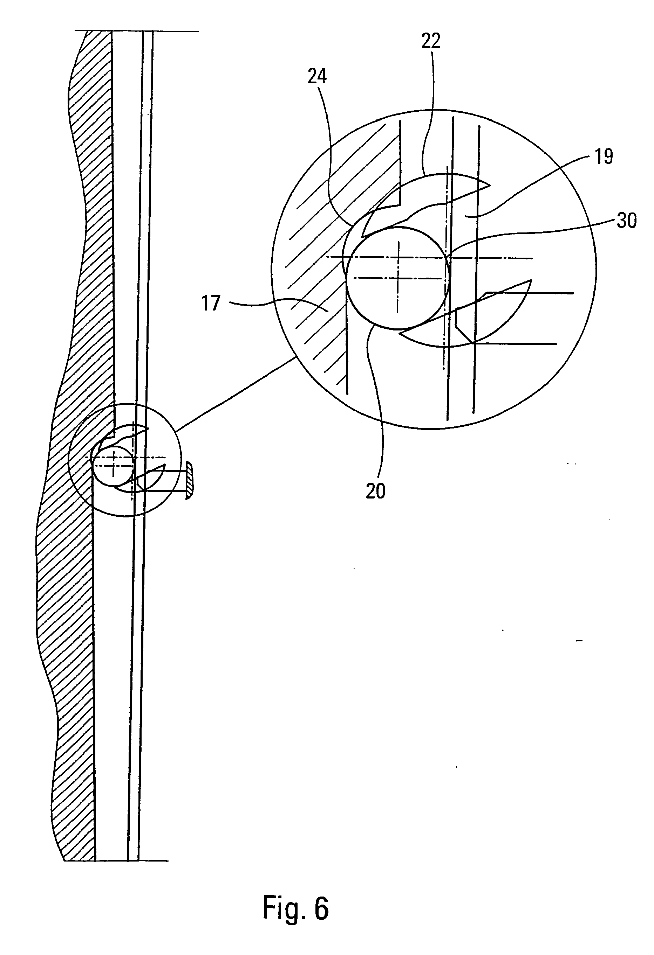

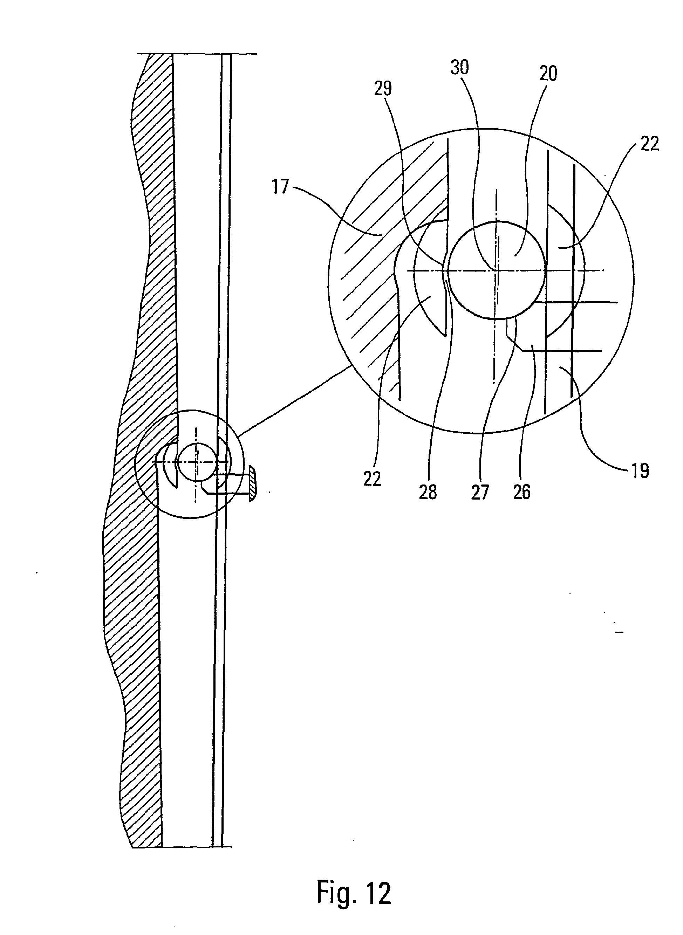

La figure 3 représente, toujours en position crabotée, les moyens de décrabotage en vue développée. Plus précisément, la rampe 17 est projetée sur un cylindre à base circulaire d'axe 1. Le cylindre est ensuite ouvert et mis à plat selon le plan de la figure 3. On voit ainsi apparaître sur cette figure l'angle d'hélice 21 de la rampe 17 par rapport au disque 19 qui est sensiblement perpendiculaire à l'axe 1. Le mode de représentation en vue développée sera à nouveau utilisé dans les figures 6, 9, 12 et 15.

Sur la figure 3, on voit également apparaître des moyens 22 pour maintenir la bille 20 en appui contre la rampe 17 lorsque le dispositif d'accouplement est en position crabotée. Avantageusement, les moyens 22 assurent la présence d'un jeu fonctionnel 23 entre la bille 20 et le disque 19 en position crabotée. Le jeu fonctionnel apparaît mieux sur une vue partielle 24 agrandie, vue partielle centrée autour de la bille 20 et apparaissant également sur la figure 3. Ce jeu fonctionnel 23 permet d'éviter le frottement de la bille contre le disque 19 lorsque le dispositif d'accouplement est en position crabotée. En effet, la rampe 17 étant solidaire du carter 4 et le disque 19 étant solidaire de l'arbre 3, un mouvement relatif du disque 19 par rapport à la rampe 17 existant en position crabotée lorsque l'arbre 3 tourne autour de l'axe 1, entraînerait un frottement et, à terme, une usure de la bille 20 en l'absence de jeu fonctionnel 23.

Les moyens 22 ont, par exemple, la forme d'une fourche qui en position crabotée empêche la bille 20 de rouler le long de la rampe 17.

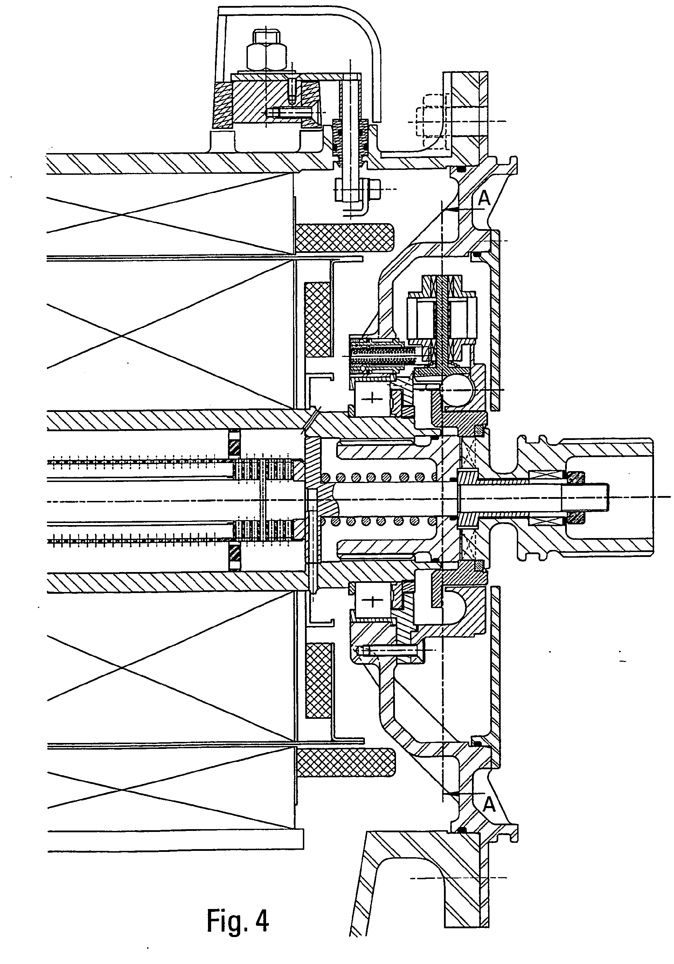

Lors du début de décrabotage, position visible sur les figures 4, 5 et 6, la fourche ou plus généralement les moyens 22 déplacent la bille 20 pour la mettre en contact à la fois avec le disque 19 et avec la rampe 17. Pour simplifier la suite de la description, la fourche portera le repère topologique 22. Mais il est bien entendu que les moyens 22 ne sont pas limités à une pièce ayant la forme d'une fourche.

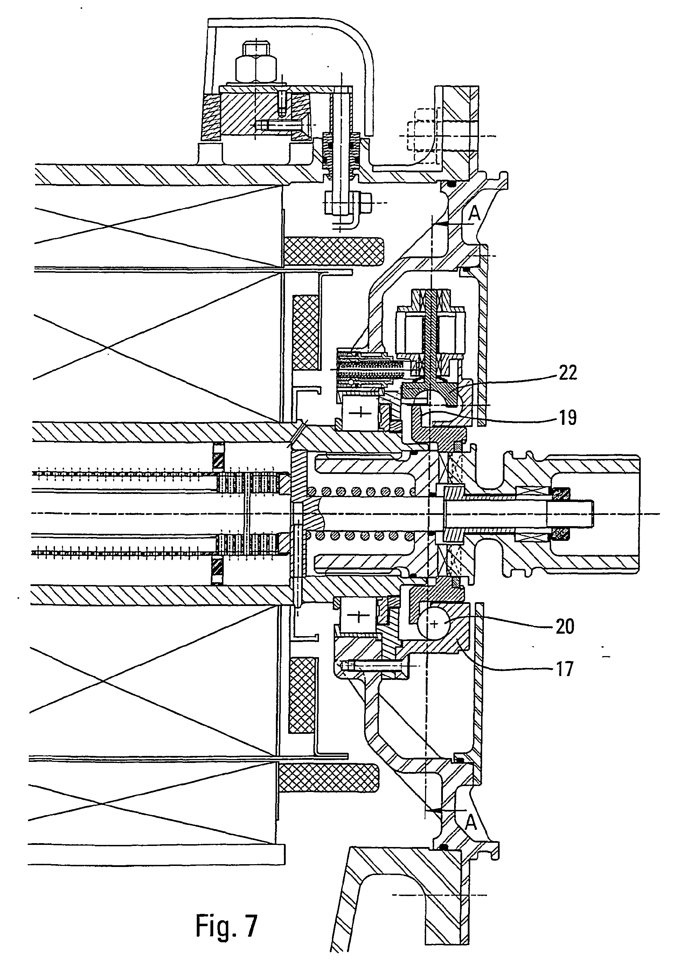

Lorsque la bille 20 a quitté le creux 24 dans lequel elle se trouvait durant la position crabotée, elle se trouve en contact à la fois avec la rampe 17 et avec le disque 19. La rotation du disque 19 par rapport à la rampe 17 entraîne la bille 20 entre le disque 19 et la rampe 17. Une position où la bille 20 roule entre le disque 19 et la rampe 17 est représentée sur les figures 7, 8 et 9. La rotation de la bille 20 écarte alors le disque 19 de la rampe 17. II s'agit d'un mouvement de translation selon l'axe 1. Ce mouvement force les dents 10 et 11 à s'écarter. La position représentée sur les figures 7 à 9 est fugitive, position dans laquelle la bille 20 roule entre le disque 19 et la rampe 17 sans s'arrêter.

Les matériaux de la rampe 17, du disque 19 et de la bille 20, ainsi que l'angle d'hélice 21, sont choisis afin que la bille 20 roule sans glisser entre la rampe 17 et le disque 19. Plus précisément, les coefficients de frottement entre, d'une part, la bille 20 et la rampe 17 et, d'autre part, entre la bille 20 et le disque 19, doivent être très supérieurs à l'angle d'hélice 21. On définit le coefficient de frottement entre deux matériaux comme l'angle d'inclinaison minimum que prend la direction d'un effort exercé sur une première pièce réalisée dans l'un des matériaux, pièce posée sur une seconde pièce réalisée dans l'autre matériau, pour que la première pièce puisse glisser par rapport à la seconde. On trouve couramment dans la littérature des valeurs de coefficients de frottement de couple de matériaux, valeurs définies par la tangente de l'angle d'inclinaison minimum.

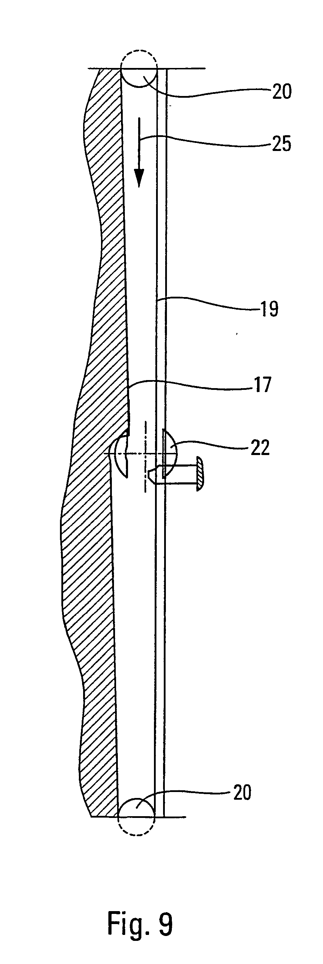

Sur la figure 9, vue développée, le sens de déplacement de la bille 20 est matérialisé par la flèche 25.

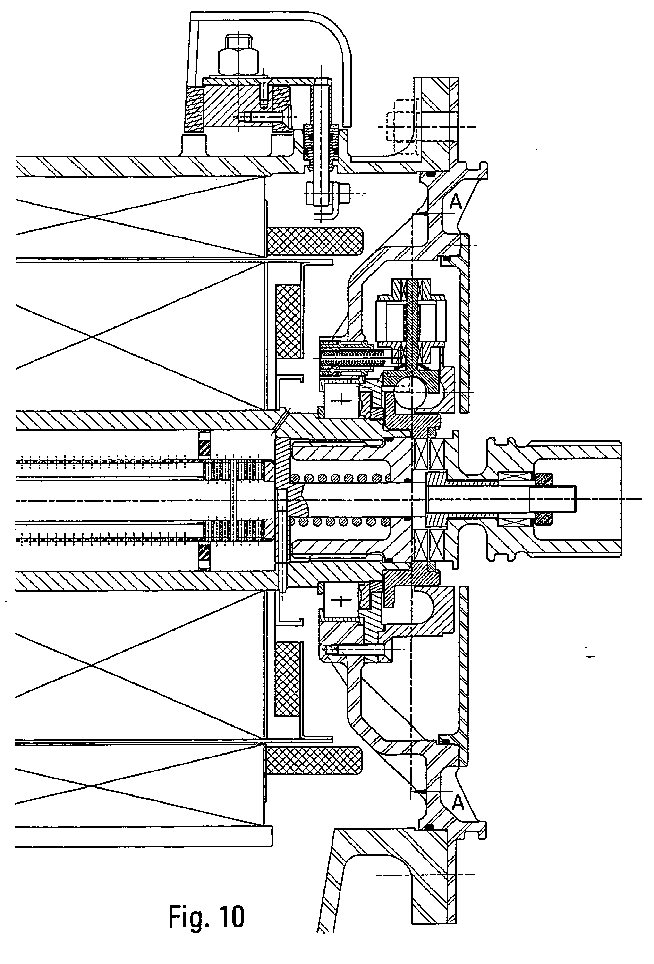

Les figures 10, 11 et 12 représentent le dispositif lors de la fin du décrabotage. La bille 20 a terminé sa course le long de la rampe 17 et est arrêtée dans sa course par une butée 26 comportant une zone de contact 27 destinée à recevoir la bille 20. Avantageusement, la zone de contact 27 a sensiblement la forme d'une portion de sphère creuse de même diamètre que celui de la bille 20 afin de répartir l'effort de contact entre la bille 20 et la butée 26 et ainsi éviter toute détérioration de la butée 26 ou de la bille 20. Si, en remplacement de la bille 20, on utilise un élément n'ayant pas une forme sphérique, la forme de la zone de contact 27 de la butée sera, bien entendu, adaptée en conséquence. En effet, le décrabotage peut se faire lorsque les arbres 2 et 3 sont en rotation. La bille 20 parcourt l'ensemble de la rampe 17 lorsque l'arbre 3 effectue deux tours de rotation autour de l'axe 1. En conséquence, plus la vitesse de rotation de l'arbre 3 est importante, plus la course de la bille 20 se fait rapidement et, par voie de conséquence, plus le choc entre la butée 26 et la bille 20 est violent. Le matériau et les dimensions de la butée 26 et de la bille 20 sont donc choisis en fonction de la vitesse maximale de rotation de l'arbre 3, vitesse à laquelle on autorise une opération de décrabotage.

Dans la position représentée sur les figures 10, 11 et 12, la bille 20 a terminé sa course contre la butée 26 mais n'a pas encore atteint sa position de repos en position décrabotée. Il persiste un jeu 28 entre la fourche 22 et la bille 20 ou, plus précisément, entre un logement 28 légèrement en creux réalisé dans la fourche 22. La position représentée sur les figures 10, 11 et 12 est éphémère car le ressort 14 tend à repousser le disque en direction de la rampe 17. La bille 20 est, par conséquent, repoussé dans le logement 29 de la fourche 22. Cette position de la bille 20 correspond à la position décrabotée du dispositif représentée sur les figures 13, 14 et 15. Dans cette position, les dents 10 solidaires de l'arbre 2 et les dents 11 solidaires de l'arbre 3 sont désaccouplés et le décrabotage est effectif. Plus précisément, l'arbre 2 et l'arbre 3 peuvent tourner indépendamment l'un de l'autre autour de l'axe 1.

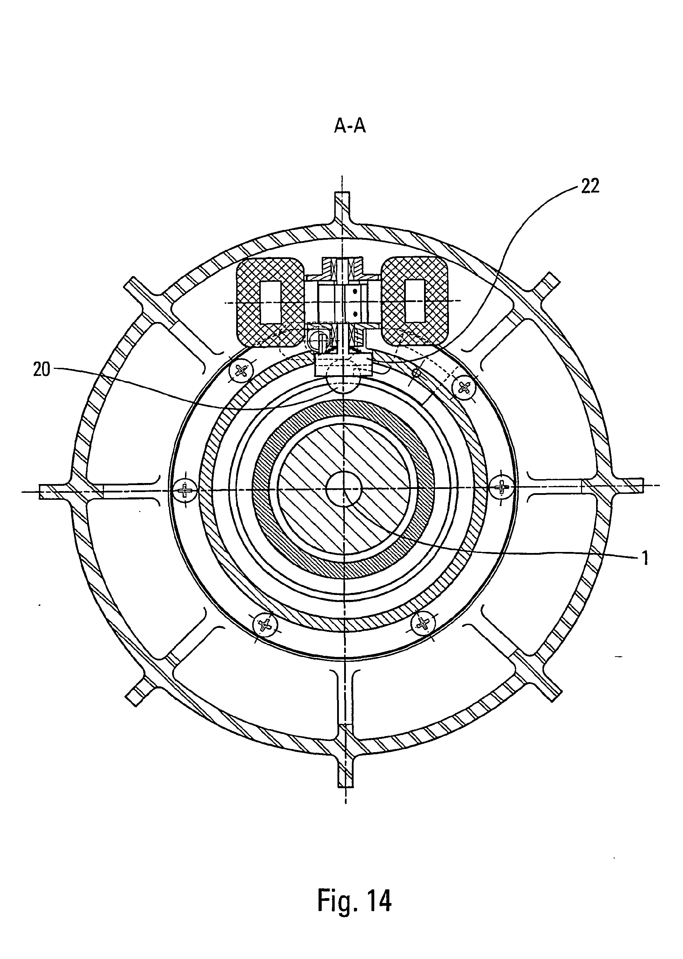

Avantageusement, la forme de la rampe 17 permet à la bille 20 d'effectuer une rotation d'environ un tour autour de l'axe 1 pendant l'opération de décrabotage. Ce tour peut se visualiser aisément en comparant les figures 2 et 14. La figure 2 représente le dispositif en position crabotée et la figure 14 en position décrabotée. Dans ces deux figures, la bille 20 a sensiblement la même position angulaire autour de l'axe 1. Entre ces deux positions, la bille 20 a sensiblement effectué un tour autour de l'axe 1. Cette position angulaire sensiblement identique autour de l'axe 1 entre ces deux positions permet d'effectuer un crabotage du dispositif de façon simple. Le crabotage consiste à passer de la position décrabotée à la position crabotée.

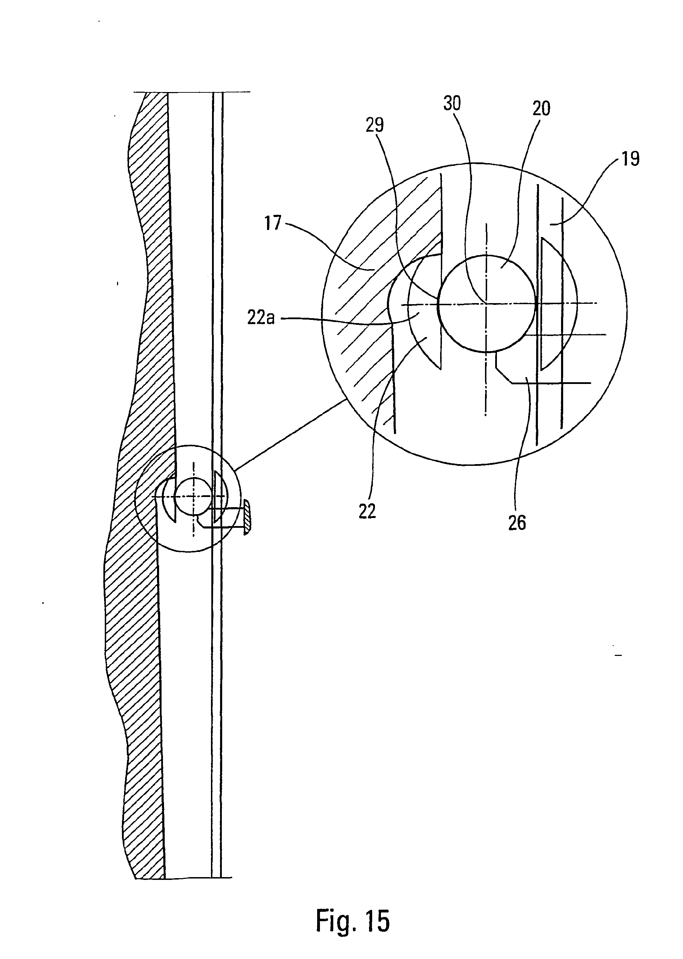

Pour effectuer le crabotage, il suffit de faire pivoter la fourche 22 afin de faire tomber la bille 20 dans le logement 24 de la rampe 17. Le pivotement de la fourche 22 se fait autour d'un axe 30 sécant avec l'axe 1. Dans la position décrabotée, l'axe 30 traverse la bille 20 sensiblement en son centre. Le pivotement de la fourche 22 est également visible sur les figures développées 3, 6, 9 et 12. En effet, dans ces figures, l'axe 30 est sensiblement perpendiculaire au plan des figures. Entre la position crabotée et la position décrabotée, la fourche 22 a sensiblement effectué un quart de tour autour de l'axe 30. En position décrabotée, visible sur la figure 15, la partie gauche 22a de la fourche, partie dans laquelle on a réalisé le logement 29, est sensiblement située dans le prolongement de la rampe 17 dans le sens du mouvement de la bille 20 lorsqu'elle parvient à la position décrabotée.

La commande du pivotement de la fourche peut être électromagnétique par exemple au moyen d'enroulement 31 et 32 visible sur la figure 2. Afin d'assurer une bonne sécurité du dispositif, la fourche 22 peut être dans la position crabotée lorsqu'un courant électrique traverse les enroulements 31 et 32. En l'absence de courant électrique dans les enroulements 31 et 32, la fourche 22 pivote pour atteindre sa position décrabotée. Ainsi, une panne dans l'alimentation en courant entraînera immédiatement le décrabotage du dispositif.

Les figures 16 et 17 représentent des moyens de commande de la fourche 22 en vue de dessus perpendiculairement à l'axe 30. Des circuits magnétiques 33 et 34 traversent les enroulements 31 et 32. Les circuits magnétiques 33 et 34, ainsi que les enroulements 31 et 32 forment une partie fixe ou stator de moyens de commande électromagnétiques de la fourche 22. Une partie mobile 35 pouvant pivoter autour de l'axe 30 et solidaire de la fourche 22 forme le rotor des moyens de commande électromagnétique de la fourche 22.

Pour augmenter encore la sécurité du dispositif d'accouplement, la fourche peut avantageusement être commandée par un fusible thermique 36. Plus précisément, lorsque la température, régnant au sein du dispositif, dépasse une valeur donnée, le fusible thermique 36 se déclenche et commande la rotation de la fourche 22 par exemple en exerçant un effort sur un doigt 37 solidaire de la fourche 22. Le doigt 37 est par exemple disposé sur la fourche 22 ou sur la partie mobile 35 de façon à ce que l'effort exercé par le fusible thermique 36 génère un couple suffisant pour faire pivoter la fourche 22 autour de l'axe 30.

La figure 16 représente le rotor 35 et le fusible thermique 36 en position crabotée. La figure 17 représente le fusible thermique 36 après son déclenchement et la position correspondante du rotor 36.

Le fusible thermique 36 comporte par exemple une chemise 38 solidaire du carter 4. A l'intérieur de la chemise 38, un piston 39 peut se mouvoir en translation suivant un axe 40 pour exercer l'effort faisant pivoter la fourche 22. Dans la position représentée figure 16, un ou plusieurs ressorts, ici deux ressorts coaxiaux 41 et 42, sont comprimés entre le piston 39 et la chemise 38. Une bille 43 verrouille la position relative du piston 39 par rapport à la chemise 38. Une came 44 retient la bille 43 dans cette position. Un élément fusible 45 bloque la came 44. Lorsque l'élément fusible 45 fond sous l'effet d'une température excessive, la came 44 peut s'insérer dans l'espace libéré par la fusion de l'élément fusible 45, ce qui permet à la bille 43 de se dégager. Le piston 39 est ainsi déverrouillé. II peut se déplacer en translation selon l'axe 40 sous l'action des ressorts 41 et 42. La figure 17 représente le fusible thermique 36 après action des ressorts 41 et 42.

Des butées 46 et 47 limitent la translation du piston 39 par rapport à la chemise 38. La butée 46 appartient à la chemise 38 et la butée 47 appartient au piston 39. Ces butées 46 et 47 viennent au contact sous l'action des ressorts 41 et 42 après déclenchement du fusible thermique 36.

Le déclenchement du fusible thermique 36 est irréversible et on ne peut pas recraboter le dispositif d'accouplement sans une intervention humaine à l'intérieur du dispositif, intervention consistant par exemple dans le remplacement ou le réarmement du fusible thermique 36.

La figure 18 représente un exemple de réalisation des dents du crabot. La figure 18 est une vue développée tout comme les figures 3, 6, 9, 12 et 15. Les sommets des dents 10 et 11 sont ici chanfreinés. Ceci permet de faciliter le recrabotage qui peut se faire quelle que soit la position angulaire relative aux arbres 2 et 3, position autour de l'axe 1. D'autres formes de dents 10 et 11 permettent également de faciliter le recrabotage. A titre d'exemple, il est possible de réaliser les côtés des dents 10 et 11 en suivant une courbe en développante de cercle.

## Revendications

1. Dispositif d'accouplement de deux arbres (2, 3) destinés à tourner par rapport à un carter (4), dans le prolongement l'un de l'autre sensiblement autour d'un axe (1), le dispositif comportant un crabot (9) permettant à un des arbres (3) d'entraîner l'autre (2) et des moyens de décrabotage permettant de désaccoupler le crabot (9), **caractérisé en ce que** les moyens de décrabotage comportent une rampe (17) solidaire du carter (4), la rampe (17) ayant une forme hélicoïdale autour de l'axe (1), un disque (19) plan dont le plan est sensiblement perpendiculaire à l'axe (1), ledit disque (19) étant solidaire d'une extrémité (12) de l'arbre (3) mobile. en translation selon l'axe (1) par rapport à l'arbre (3), et un élément (20) destiné à rouler entre la rampe (17) et le disque (19) de façon à provoquer un mouvement de translation de l'extrémité (12) de l'arbre (3) par rapport au carter (4) sensiblement suivant l'axe (1), le mouvement de translation permettant de désaccoupler le crabot (9).

2. Dispositif selon la revendication 1, **caractérisé en ce que** l'élément destiné à rouler est une bille (20).

3. Dispositif selon l'une des revendications précédentes, **caractérisé en ce que** la forme de la rampe (17) permet à l'élément (20) d'effectuer une rotation d'environ un tour autour de l'axe (1) pendant l'opération de décrabotage.

4. Dispositif selon l'une des revendications précédentes, **caractérisé en ce qu'**il comporte des premiers moyens (22) pour maintenir l'élément (20) en appui contre la rampe (17) en position crabotée.

5. Dispositif selon la revendication 4, **caractérisé en ce que** les premiers moyens (22) assurent la présence d'un jeu fonctionnel (23) entre l'élément (20) et le disque (19).

6. Dispositif selon l'une des revendications 4 ou 5, **caractérisé en ce que**, lors du début de décrabotage, les premiers moyens (22) déplacent l'élément (20) pour le mettre en contact avec le disque (19) et avec la rampe (17).

7. Dispositif selon la revendication 6, **caractérisé en ce qu'**il comporte des seconds moyens (31 à 35 et 36) pour commander le mouvement des premiers moyens (22), mouvement permettant le déplacement de l'élément (20).

8. Dispositif selon la revendication 7, **caractérisé en ce que** les seconds moyens comportent des troisièmes moyens (31 à 35) électromagnétiques.

9. Dispositif selon l'une quelconque des revendications 7 ou 8, **caractérisé en ce que** les seconds moyens comportent un fusible thermique (36).

10. Dispositif selon l'une des revendications précédentes, **caractérisé en ce qu'**il comporte une butée (26) pour arrêter le roulage de l'élément (20) lors de la fin du décrabotage.

## Claims

1. Device for coupling two shafts (2, 3) that are intended to rotate with respect to a casing (4) in the continuation of one another substantially about an axis (1), the device comprising a dog clutch (9) allowing one of the shafts (3) to drive the other (2) and declutching means allowing the dog clutch (9) to be uncoupled, **characterized in that** the declutching means comprise a ramp (17) secured to the casing (4), the ramp (17) having a helical shape about the axis (1), a flat disc (19), the plane of which is substantially perpendicular to the axis (1), the said disc (19) being secured to one end (12) of the shaft (3) capable of translational movement along the axis (1) relative to the shaft (3), and an element (20) intended to run between the ramp (17) and the disc (19) so as to cause the end (12) of the shaft (3) to effect a translational movement relative to the casing (4) substantially along the axis (1), the translational movement uncoupling the dog clutch (9).

2. Device according to Claim 1, **characterized in that** the element intended to run is a ball (20).

3. Device according to one of the preceding claims, **characterized in that** the shape of the ramp (17) allows the element (20) to rotate through approximately one revolution about the axis (1) during the declutching operation.

4. Device according to one of the preceding claims, **characterized in that** it comprises first means (22) for keeping the element (20) pressed against the ramp (17) when the clutch is in the engaged position.

5. Device according to Claim 4, **characterized in that** the first means (22) ensure that there is a functional clearance (23) between the element (20) and the disc (19).

6. Device according to one of Claims 4 and 5, **characterized in that**, at the start of declutching, the first means (22) move the element (20) to bring it into contact with the disc (19) and with the ramp (17).

7. Device according to Claim 6, **characterized in that** it comprises second means (31 to 35 and 36) for causing the first means (22) to move, which movement allows the element (20) to be moved.

8. Device according to Claim 7, **characterized in that** the second means comprise electromagnetic third means (31 to 35).

9. Device according to either one of Claims 7 and 8, **characterized in that** the second means comprise a heat-sensitive breaker (36).

10. Device according to one of the preceding claims, **characterized in that** it comprises a stop (26) to stop the element (20) from continuing to run at the end of declutching.

## Patentansprüche

1. Vorrichtung zum Koppeln von zwei Wellen (2, 3), die dazu vorgesehen sind, sich in Bezug auf ein Gehäuse (4) in gegenseitiger Verlängerung im Wesentlichen um eine Achse (1) zu drehen, wobei die Vorrichtung eine Klauenkupplung (9), die einer der Wellen (3) ermöglicht, die andere (2) anzutreiben, und Auskuppelmittel, die das Auskuppeln der Klauenkupplung (9) ermöglichen, enthält, **dadurch gekennzeichnet, dass** die Auskuppelmittel eine mit dem Gehäuse (4) fest verbundene Rampe (17), die eine schraubenlinienförmige Form um die Achse (1) hat, eine ebene Scheibe (19), deren Ebene zu der Achse (1) im Wesentlichen senkrecht ist, wobei die Scheibe (19) mit einem Ende (12) der Welle (3), das in Bezug auf die Welle (3) längs der Achse (1) translatorisch beweglich ist, fest verbunden ist, und ein Element (20), das dazu vorgesehen ist, zwischen der Rampe (17) und der Scheibe (19) zu rollen, derart, dass eine translatorische Bewegung des Endes (12) der Welle (3) in Bezug auf das Gehäuse (4) im Wesentlichen längs der Achse (1) hervorgerufen wird, enthalten, wobei die translatorische Bewegung das Auskuppeln der Klauenkupplung (9) ermöglicht.

2. Vorrichtung nach Anspruch 1, **dadurch gekennzeichnet, dass** das Element, das vorgesehen ist zu rollen, eine Kugel (20) ist.

3. Vorrichtung nach einem der vorhergehenden Ansprüche, **dadurch gekennzeichnet, dass** die Form der Rampe (17) dem Element (20) ermöglicht, während des Auskuppelbetriebs ungefähr eine vollständige Umdrehung um die Achse (1) auszuführen.

4. Vorrichtung nach einem der vorhergehenden Ansprüche, **dadurch gekennzeichnet, dass** sie erste Mittel (22) enthält, um das Element (20) in der eingekuppelten Stellung abgestützt gegen die Rampe (17) zu halten.

5. Vorrichtung nach Anspruch 4, **dadurch gekennzeichnet, dass** die ersten Mittel (22) das Vorhandensein eines funktionalen Spiels (23) zwischen dem Element (20) und der Scheibe (19) sicherstellen.

6. Vorrichtung nach einem der Ansprüche 4 oder 5, **dadurch gekennzeichnet, dass** am Beginn des Auskuppelns die ersten Mittel (22) das Element (20) verlagern, um es mit der Scheibe (19) und mit der Rampe (17) in Kontakt zu bringen.

7. Vorrichtung nach Anspruch 6, **dadurch gekennzeichnet, dass** sie zweite Mittel (31 bis 35 und 36) aufweist, um die Bewegung der ersten Mittel (22) zu steuern, wobei diese Bewegung die Verlagerung des Elements (20) ermöglicht.

8. Vorrichtung nach Anspruch 7, **dadurch gekennzeichnet, dass** die zweiten Mittel dritte elektromagnetische Mittel (31 bis 35) enthalten.

9. Vorrichtung nach einem der Ansprüche 7 oder 8, **dadurch gekennzeichnet, dass** die zweiten Mittel eine Wärmeschmelzsicherung (36) enthalten.

10. Vorrichtung nach einem der vorhergehenden Ansprüche, **dadurch gekennzeichnet, dass** sie einen Anschlag (26) aufweist, um das Rollen des Elements (20) am Ende des Auskuppelns anzuhalten.
